# EUROPÄISCHE PATENTANMELDUNG

(11) **EP 0 849 902 A2**
(43) Veröffentlichungstag der Anmeldung: **24.06.1998**
(21) Anmeldenummer: 97118791.9
(22) Anmeldetag: 29.10.1997
(51) Int. Cl.: H04B 10/24

(54) **Schalter mit optischen Isolatoren**

(30) Priorität: 20.12.1996 DE 19653275
(71) Anmelder: ROBERT BOSCH GMBH, 70442 Stuttgart (DE)
(72) Erfinder: Wiechmann, Manfred, 71522 Backnang (DE); Kohn, Ulrich, 71522 Backnang (DE)

(57) **Zusammenfassung**

Schalter mit optischen Isolatoren in einem Abschnitt einer Übertragungsstrecke, bei dem zwischen nur einem Eingang und nur einem Ausgang des Abschnitts zwei Isolatoren geschaltet sind, von denen wenigstens einer in seiner Übertragungsrichtung umschaltbar ist.

Solange die beiden Isolatoren dieselbe Übertragungsrichtung haben, wirken sie wie ein einziger Isolator. Sind bei hintereinander geschalteten Isolatoren die Übertragungsrichtungen dagegen gegeneinander geschaltet, wirken die Isolatoren wie ein abgeschalteter Schalter. Sind aber bei einander parallel geschalteten Isolatoren die Übertragungsrichtungen gegeneinander geschaltet, entfällt die Isolationswirkung in beiden Richtungen.

## Beschreibung

### Stand der Technik

Die Erfindung geht von der Gattung aus, wie in dem unabhängigen Anspruch 1 angegeben.

Unter den optischen Isolatoren gibt es polarisationsabhängig und polarisationsunabhängig arbeitende.

Ein polarisationsabhängiger Isolator ist beispielsweise beschrieben in "Optische Nachrichtentechnik", Teil II, 2. Auflage, von H. G. Unger, S. 530f. Allerdings muß man sich dort im allgemeinen als Vorschalteinrichtung noch einen Polarisator hinzudenken, da nicht immer davon ausgegangen werden kann, daß die Strahlungsquelle linear polarisierte Strahlung liefert. Als Magnet ist üblichherweise ein Permanentmagnet vorgesehen. Der Prinzipaufbau eines solchen Isolators ist auch in "Laser, Lichtverstärker oder -oszillatoren" von Dr. Dieter Röss, Akademische Verlagsgesellschaft Frankfurt/Main, 1966, S. 95 beschrieben.

Ein polarisationsunabhängiger Isolator ist beschrieben in IEEE Photonics Technology Letters, Vol. 1, No. 3, March 1989, Seiten 68 bis 70.

Ein polarisationsunabhängiger Isolator wird auch in einem bekannten optischen Überkreuzschalter verwendet, der in einem Prospekt der FDK Corporation unter der Bezeichnung "2x2 OPTICAL SWITCH YS-111A" beschrieben ist. Mit diesem optischen Schalter können zwei Eingänge jeweils auf zwei Ausgänge geschaltet werden, wobei sich die Zuordnung kreuzweise vertauscht, wenn die Richtung eines Magnetfeldes elektrisch geändert wird.

Der Schalter nach der Erfindung läßt sich in eine Übertragungsstrecke eingeschalten, die Teil eines Übertragungs-Ringes oder -Netzes ist.

### Vorteile der Erfindung

Der Anmeldungsgegenstand mit den Merkmalen des Anspruchs 1 hat folgenden Vorteil:
Solange die beiden Isolatoren dieselbe Übertragungsrichtung haben, wirken sie wie ein einziger Isolator. Sind bei hintereinander geschalteten Isolatoren die Übertragungsrichtungen dagegen gegeneinander geschaltet, wirken die Isolatoren wie ein abgeschalteter Schalter. Sind aber bei einander parallel geschalteten Isolatoren die Übertragungsrichtungen gegeneinander geschaltet, entfällt die Isolationswirkung in beiden Richtungen.

Vorteilhafte Weiterbildungen sind in den abhängigen Ansprüchen angegeben, deren Merkmale auch, soweit sinnvoll, miteinander kombiniert werden können.

### Zeichnungen

Ausführungsbeispiele der Erfindung und ihrer Weiterbildungen sind in den Zeichnungen gezeigt und in der nachfolgenden Beschreibung näher erläutert. Es sind dargestellt in:
Figur 1: Mehrere Ausführungsbeispiele eines erfindungsgemäßen Schalters.
Figur 2: Ein Ausführungsbeispiel eines elektrisch umschaltbaren Isolators.

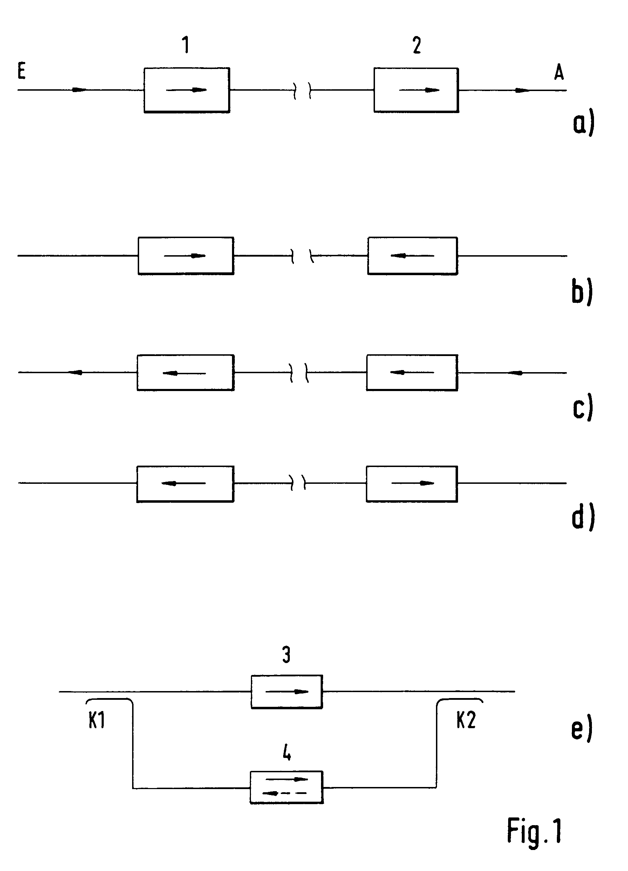

Beschreibung des Ausführungsbeispiels nach Figur 1:

Die Teilfigur a zeigt den Ausgangszustand eines Schalters nach der Erfindung, der aus zwei hintereinander geschalteten Isolatoren 1 und 2 in einem Abschnitt einer optischen Übertragungsstrecke mit dem einzigen Eingang E und dem einzigen Ausgang A besteht, wobei wenigstens einer der Schalter in seiner Richtung umschaltbar ist.

Nach Umschaltung des Isolators 2 ergibt sich der Zustand, der in Figur 1b dargestellt ist und in dem die Übertragungsstrecke gesperrt ist. Der Schalter nach Figur 1a arbeitet also wie ein Ventil, das durch Umschaltung eines Isolators in beiden Übertrtagungsrichtungen gesperrt werden kann.

Sind beide Isolatoren 1 und 2 in ihrer Richtung umschaltbar, so sind auch noch die Zustände nach den Figuren 1c und 1d möglich. Bei Figur 1c ist die Übertragungsrichtung und Ventilwirkung gegenüber Figur 1a umgekehrt, während bei Figur 1d wieder eine Sperrung in beiden Richtungen erfolgt.

In Figur 1e sind über Koppler K1 und K2 zwei Isolatoren 3 und 4 einander parallel geschaltet. Wenn einer davon - hier der Isolator 4 - umschaltbar ist, wie durch den gestrichelten Richtungspfeil angedeutet, ergibt sich ein Ventil (durchgezogener Betriebsfall), das durch Umschaltung des Isolators 4 (gestrichelter Fall), überbrückbar ist; die Ventilwirkung läßt sich sozusagen außer Kraft setzen. Sind beide Isolatoren 3, 4 umschaltbar, läßt sich auch die Übertragungsrichtung umkehren unter Aufrechterhaltung der (umgekehrten) Ventilwirkung.

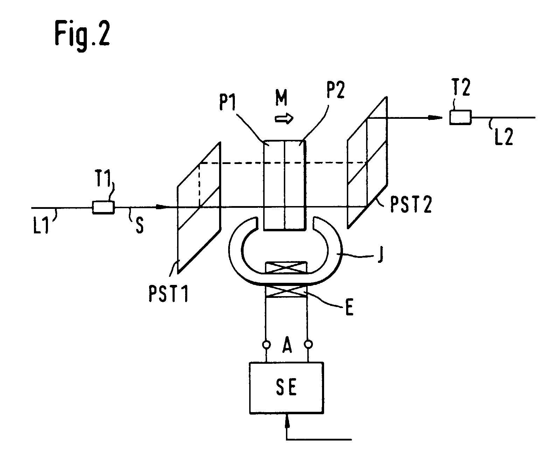

Alle Umschaltungen lassen sich vollelektisch durchführen, wofür Figur 2 ein Beispiel zeigt. .

Aufbau des Ausführungsbeispiels eines umschaltbaren Isolators nach Figur 2:

Im Luftspalt eines weichmagnetischen Joches J eines Elektromagneten E liegt eine Platte P1 eines magnetooptischen Materials, die einen Faraday-Rotator bildet, und eine Halbwellenplatte P2, die magnetfeldunabhängig eine Drehung der Polarisationsebene von hindurchgeleitetem Licht um 45° bewirkt, und zwar unabhängig von der optischen Strahlungsrichtung, also beispielsweise immer im Uhrzeigersinn. Die Richtung des Magnetfeldes des Elektromagneten E ist mit dem Pfeil M angedeutet. Durch den Elektromagnet E wird nur beim Ein- und Umschalten Strom geleitet; für den darauffolgenden Betrieb genügt das remanente Magnetfeld. Die Richtung des Magnetfeldes ist umkehrbar durch kurzzeitiges Anlegen einer umpolenden Gleichspannung an die Anschlüsse A des Elektromagneten. Dazu sind Steuermittel SE vorgesehen.

An einem Tor T1 des gezeigten Isolators ein Lichtwellenleiter L1 und an einem Tor T2 ein Lichtwellenleiter L2 angeschlossen. Dem Faraday-Rotator ist eine Vorund eine Nachschalteinrichtung in Gestalt eines polarisierenden Strahlteilers PST 1 beziehungsweise PST2 vor- beziehungsweise nachgeschaltet.

Funktion des bevorzugten Ausführungsbeispiels nach Figur 2:

Ein Strahl S aus dem Lichtwellenleiter L1 gelangt zunächst in den polarisierenden Strahlteiler PST 1 und wird dort in zwei unterschiedlich polarisierte Teil-strahlen aufgeteilt, deren Polarisationsebene in der magnetooptischen Platte P1 um 45° gedreht und in der Halbwellenplatte P2 wieder um 45° zurückgedreht wird. In dem polarisierenden Strahlteiler PST2 werden die Teilstrahlen wieder miteinander vereinigt und gelangen über das Tor T2 in den Lichtwellenleiter L2.

In umgekehrter Richtung kann sich das Licht nicht von T2 nach T1 ausbreiten. Zwar wird die Polarisationsebene in der Halbwellenplatte P2 wiederum um 45° gedreht, aber in der magnetooptischen Platte P1 nicht zurück, sondern weiter gedreht. Das hat zur Folge, daß die Teilstrahlen im Strahlteiler auf dessen untere Fläche gelenkt und dort reflektiert werden, so daß sie nicht in das Tor 1 gelangen können. Die Einrichtung nach Figur 3 wirkt demnach als optischer Isolator.

Erst nach Umkehr des Magnetfeldes mittels der Steuermittel SE kann ein Gegenstrahl vom Tor T2 zum Tor T1 gelangen, während dann der Weg von T1 nach T2 versperrt ist.

Zu Anwendungsmöglichkeiten wird ergänzend auf die parallelen Patentanmeldungen vom selben Tag und Anmelder mit den Titeln "Bidirektionaler optischer Verstärker mit optischem Isolator" und Übertragungs-Ring oder - Netz jeweils aus Lichtwellenleiter - Übertragungsstrecken", Erfinder jeweils U. Kohn, verwiesen.

## Patentansprüche

1. Schalter mit optischen Isolatoren in einem Abschnitt einer optischen Übertragungsstrecke, dadurch gekennzeichnet, daß zwischen nur einem Eingang (E) und nur einem Ausgang (A) des Abschnitts zwei Isolatoren (1, 2, 3, 4) geschaltet sind, von denen wenigstens einer in seiner Übertragungsrichtung umschaltbar ist.

2. Schalter nach Anspruch 1, dadurch gekennzeichnet, daß die beiden Isolatoren (1, 2) in dem Abschnitt mittelbar oder unmittelbar hintereinander geschaltet sind.

3. Schalter nach Anspruch 1, dadurch gekennzeichnet, daß die beiden Isolatoren (3, 4) zwischen dem Eingang und dem Ausgang einander parallel geschaltet sind.

4. Schalter nach einem der vorangehenden Ansprüche, dadurch gekennzeichnet, daß die beiden Isolatoren bezüglich ihrer Übertragungsrichtung unabhängig voneinander umschaltbar sind.

5. Schalter nach einem der vorangehenden Ansprüche, dadurch gekennzeichnet, daß die Übertragungsrichtungen der optischen Isolatoren (1, 2, 3, 4) elektrisch umschaltbar sind.

6. Schalter nach einem der vorangehenden Ansprüche, dadurch gekennzeichnet, daß ein optischer Isolator wenigstens zwei um 45° gegeneinander gedrehte Polarisationsfilter mit zwischengeschalteter Einrichtung zur nichtreziproken Drehung der Polarisationsebene aufweist.

7. Schalter nach einem der Ansprüche 1 bis 5, dadurch gekennzeichnet, daß ein Isolator polarisationsunabhängig ist.

8. Schalter nach Anspruch 7, dadurch gekennzeichnet, daß der Isolator wenigstens einen polarisationsabhängigen optischen Strahlteiler und eine Einrichtung zur nichtreziproken Drehung der Polarisationsebene sowie Mittel zur reziproken Änderung der Drehrichtung aufweist.

9. Schalter nach einem der vorangehenden Ansprüche, dadurch gekennzeichnet, daß er in eine Übertragungsstrecke eingeschaltet ist, die Teil eines Übertragungs-Ringes oder -Netzes ist.

10. Schalter nach einem der vorangehenden Ansprüche, dadurch gekennzeichnet, daß ein Isolator folgendes aufweist:
- magnetooptische Mittel (P1), die in einem Magnetfeld angeordnet sind und die unter dessen Einfluß die Polarisationsebene eines durchgeleiteten optischen Strahles (S) mit fortschreitender Strahlungsausbreitung drehen,
- eine Vor- und eine Nachschalteinrichtung (PST1, P2, PST2), die den magnetooptischen Mitteln (P1) vor- beziehungsweise nachgeschaltet sind und die Polarisationsebene des Strahles so beeinflussen, daß dieser trotz der Drehung seiner Polarisationsebene in den magnetooptischen Mitteln den Isolator passieren kann, während ein Gegenstrahl nicht durchgelassen wird, und daß die Richtung (M) des Magnetfeldes mit Hilfe von Steuermitteln (SE) umkehrbar ist, so daß nach Umkehr des Magnetfeldes nur noch der Gegenstrahl passieren kann.

11. Schalter nach Anspruch 10, dadurch gekennzeichnet, daß die Steuermittel (SE) zum Umpolen eines Elektromagneten (E) vorgesehen sind, der das Magnetfeld erzeugt.

12. Schalter nach Anspruch 10 oder 11, dadurch gekennzeichnet, daß die Steuermittel (SE) mittelbar durch optische Steuersignale steuerbar sind.

13. Schalter nach einem der vorangehenden Ansprüche, dadurch gekennzeichnet, daß der Abschnitt mit den optischen Isolatoren verstärkerlos ist.
